Europäisches Patentamt

European Patent Office

Office européen des brevets

(11) Publication number: **0 225 770**
A2

(12) **EUROPEAN PATENT APPLICATION**

(21) Application number: **86309290.4**

(22) Date of filing: **27.11.86**

(51) Int. Cl.⁴: **A 23 J 3/00**, A 23 P 1/12, A 23 G 1/04, A 23 G 1/20

(30) Priority: **27.11.85 JP 268013/85**

(43) Date of publication of application: **16.06.87**
**Bulletin 87/25**

(84) Designated Contracting States: **DE FR GB NL**

(71) Applicant: **Minaminihon Rakuno Kyodo Kabushiki Kaisha, No.3 Himegi-cho, 32-gaiku, Miyakonozyo-shi, Miyazaki-ken (JP)**

(72) Inventor: **Naoki, Yagi, No. 31-16, Senrioka-kami, Suita-shi Osaka-fu (JP)**
Inventor: **Kwang, Young Kim, No. 1-9, Kotobuki-cho 1-chome, Higashi Osaka-shi Osaka-fu (JP)**
Inventor: **Tarushige, Nakaji, No. 32, Minami Uematsu-cho 3-chome, Yao-shi Osaka-fu (JP)**
Inventor: **Yukiharu, Kikuchi, No. 1-6-1, Kokubuichiba, Kashiwara-shi Osaka-fu (JP)**
Inventor: **Kazuaki, Futami, No. 16-3, Kumano-cho 1-chome, Toyonaka-shi Osaka-fu (JP)**
Inventor: **Kenji, Tatsuno, No. 728-1, Tsutsui-cho, Yamatokoriyama-shi Nara-ken (JP)**

(74) Representative: **Bizley, Richard Edward et al, BOULT, WADE & TENNANT 27 Furnival Street, London EC4A 1PQ (GB)**

(54) **Producing fibrous food products.**

(57) A process for producing a fibrous food product which comprises adjusting the water content of a mixture of milk protein having acid- and base-resistance, a material to which fibrous texture is to be provided and a source of calcium ion or magnesium ion to 20 to 86% by weight, and then extruding the mixture from an extruder at a temperature of not lower than 60°C and at a pressure of not lower than 0.05 kg/cm².

EP 0 225 770 A2

## PRODUCING FIBROUS FOOD PRODUCTS

The present invention relates to a process for producing a fibrous food product in which a fibrous food product having good fibrous texture is obtained by using a non-fibrous food or a non-fibrous raw material of food.

Heretofore, it has been proposed to form a fibrous soybean protein [Kelly et al., Cereal Chem., 43, 195-206 (1966)] and to form a fibrous milk protein (Japanese Patent Publication No. 29780/1971) to provide texture to these proteins, and a textured soybean protein has been already marketed. However, these proteins themselves tend to form fibrous texture in the nature thereof.

In order to improve texture of food by either providing fibrous texture to a non-fibrous food or a non-fibrous raw material of food which is hard to form a fibrous texture in the nature, or varying texture of food or a raw material thereof, the present inventors have intensively studied. As the result, it has been found that a food product having good fibrous texture can be produced from almost all food or raw materials thereof and texture of food or raw materials thereof can be improved by using a milk protein having acid- and base-resistance such as obtained according to the process previously developed by the present inventors

- 2 -    0225770

(Japanese Patent Application No. 069625/1985 corresponding to U.S. Patent Application Serial No. 769,871 and EP-A-0 174 192) and an extruder applicable to cooking under certain conditions.

The present invention aims to improve the texture of food and provides a process for producing a fibrous food product having good fibrous texture from a non-fibrous food or a non-fibrous raw material of food.

Generally, the invention is concerned with the use of a milk protein having acid- and base-resistance in imparting a fibrous quality to a non-fibrous foodstuff or ingredient thereof or in increasing the fibrous texture of such foodstuff or ingredient.

According to the present invention, there is provided a process for producing a fibrous food product which comprises

adjusting the water content of a mixture of raw materials to 20 to 86 % by weight, if necessary, with mixing, said mixture comprising

(a) 100 parts by weight as dry solids of milk protein having acid- and base-resistance which is obtained by subjecting an aqueous solution or dispersion containing casein and 0.5 to 30 parts by weight of an acidic polysaccharide per 100 parts by weight of casein to a heat treatment at pH 7.3 to 10.5 and at a temperature of 70°C or higher for 3 minutes or more;

(b) 5 to 400 parts by weight of a material to which fibrous texture is provide, said material being a member selected from the group consisting of fats and oils, carbohydrates having a molecular weight of less than 180, proteins, peptides, food or raw materials thereof which contain these as ingredients thereof, and a mixture thereof; and

(c) 0.13 to 2.0 parts by weight of calcium ion, 0.065 to 1.0 part by weight of magnesium ion, or a mixture of calcium ion and magnesium ion corresponding to 0.13 to 2.0 parts by weight as calcium ion, and

extruding the mixture from an extruder at a temperature of not lower than 60°C and at a pressure of not lower than 0.05 kg/cm$^2$.

By using the process of the present invention, fibrous texture can be provided to almost all food and raw materials thereof. In addition, conventional food and raw materials thereof can be changed to fibrous food products having new fibrous texture.

The milk protein having acid- and base-resistance can be obtained according to the description of Japanese Patent Application No. 069625/1985. That is, firstly, an aqueous solution or dispersion containing casein, and an acidic polysaccharide in an amount 0.5 to 30 parts by weight per 100 parts by weight of casein is prepared.

Casein used includes casein or sodium caseinate.
Casein is used by dissolving it with an alkali such as
sodium hydroxide, potassium hydroxide, aqueous ammonia,
sodium carbonate, sodium triphosphate, potassium carbonate,
calcium hydroxide, magnesium hydroxide, etc.  In case of
using an alkali such as calcium hydroxide or magnesium
hydroxide which is a calcium or magnesium ion source, as
described hereinafter, the amount thereof should be 1.4
parts per 100 parts of casein or less in view of improvement
of thickening activity.  Sodium caseinate is used by
dissolving it in warm water.  The amount of casein used is 3
% by weight or more based on the entire aqueous solution or
dispersion to be prepared, generally, 3 to 30 % by weight is
preferred.

The acidic polysaccharide includes alginic acid,
sodium alginate, alginic acid propylene glycol, carrageenin
(any one of $\kappa$, $\lambda$ and $\iota$), furcellaran, gum karaya, gum
ghatti, gum tragacanth, xanthan gum, methyl cellulose,
carboxy methyl cellulose, low-methoxyl pectin, etc.  They
can be used alone or in a combination thereof.  The acidic
polysaccharide is used in the ratio of 0.5 to 30 parts by
weight per 100 parts by weight of casein.  When this ratio
of the acidic polysaccharide to casein is either too small
or too large, any desired resistance to acids and bases is
not expected.

The aqueous solution or dispersion can be prepared by dissolving or dispersing casein and an acidic
polysaccharide simultaneously or successively in warm water
or an aqueous solution of the above alkali according to a
conventional manner.  Alternatively, it can be prepared by
separately dissolving or dispersing casein and an acidic
polysaccharide in advance and then mixing them.

Then, the aqueous solution or dispersion thus
obtained is subjected to a heat treatment at pH 7.3 to 10.5
and at a temperature of 70°C or higher for 3 minutes or more
to obtain the milk protein having the desired acid- and
base-resistance.

When an aqueous alkaline solution is employed to
dissolve casein, adjustment of pH of the solution or
dispersion is not always required.  However, when adjustment
of pH is required, it is carried out with the above
alkali.  The upper limit of the heating temperature and the
heating time are not limited to specific degrees unless they
have any adverse effect on the resulting product.  In
general, however, the heat treatment is preferably carried
out at 70 to 130°C for up to 90 minutes in view of operation
and economical efficiency.  The heat treatment can be
carried out in the presence of calcium ion or magnesium ion
to improve thickening activity of casein.  For this purpose,
it is preferable to add a calcium ion source or a magnesium
ion source prior to or during the heat treatment.  As the
calcium or magnesium ion source, there can be used calcium
chloride, calcium phosphate, calcium carbonate, calcium sulfate, calcium lactate, calcium hydroxide, magnesium chloride, magnesium sulfate, magnesium citrate, magnesium lactate, etc. The calcium or magnesium ion source can be used in a ratio of 0.1 to 1.4 parts by weight per 100 parts by weight of casein calculated as calcium or magnesium ion. When this ratio is too much, thickening activity is rather spoiled.

After cooling, the solution or dispersion thus treated can be directly used as the milk protein having acid- and base- resistance in the process of the present invention. Alternatively, it can be further subjected to additional processes such as concentration, drying, etc. according to a conventional manner.

In the present invention, per 100 parts by weight as dry solids of the milk protein, 5 to 400 parts by weight of the material to which fibrous texture is provide is used.

The material is a member selected from the group consisting of fats and oils, carbohydrates having a molecular weight of less than 180, proteins, peptides, food or raw materials thereof which contains these as ingredients thereof, and a mixture thereof.

Examples of fats and oils include butter, butter oil, palm oil, coconut oil, linseed oil, rapeseed oil, soybean oil, sunflower oil, sesame oil, cacao butter, peanut oil, cottonseed oil, olive oil, lard, tallow, fish oil, and their hardened, fractionated and transesterified products. Examples of carbohydrates having a molecular weight of less than 180 are saccharides such as glucoes, fructose, sucrose, maltose, lactose, starch, starch hydrolysate, glucomannan, guar gum, locust bean gum, tamarind gum, carrageenin, xanthan gum, low-methoxyl pectin, high-methoxyl pectin, alginic acid, and sodium alginate. When the molecular weight thereof is too small, it is difficult to provide texture thereto. Examples of protein are casein, gelatin, soybean protein, gluten, ovalbumin, whey protein, and serum protein. Peptides include decomposition products of these protein. Examples of food or raw materials which contains these as ingredients thereof include meat of fish, cattle and poultry, skim milk, whole milk, soy meal, wheat flour, cocoa powder, corn grits, condensed milk, cheese, chocolate, fish paste (Surimi), cattle meat paste, poultry meat paste and the like. These materials can be used alone or in a combination thereof. When the ratio of the amount of these materials to that of the above acid- and base-resistant milk protein is too small or too large, desired good fibrous texture can not be provided to a resulting food product.

In addition to the above calcium or magnesium ion source added during the preparation of the milk protein having acid- and base-resistant, a calcium ion source, a magnesium ion source or a mixture thereof is further added. Examples of the calcium ion source and the magnesium ion source include calcium chloride, calcium phosphate, calcium carbonate, calcium gluconate, calcium hydroxide, calcium citrate, calcium lactate, calcium sulfate, magnesium

0225770

chloride, magnesium sulfate, magnesium phosphate, magnesium carbonate, magnesium hydroxide, magnesium citrate, and magnesium lactate. These calcium ion and magnesium ion sources are used in an amount of 0.13 to 2.0 parts by weight of calcium ion or in an amount of 0.065 to 1.0 part by weight of magnesium ion per 100 parts by weight of the milk protein. When a mixture of calcium ion and magnesium ion sources are used, it is used in an amount corresponding to 0.13 to 2.0 parts by weight as calcium ion (as calcium or magnesium, 3.25 to 50 gram equivalent weight per 100 kg of the acid- and base-resistant milk protein). When the amount of these calcium ion and magnesium ion sources is too small or too large, desired good fibrous texture can not be provided to a resulting food product.

According to the present invention, the water content of a mixture of the above ingredients is adjusted to 20 to 86 % by weight, if necessary, with mixing, and then the mixture is extruded from an extruder at a temperature of not lower than 60°C and at a pressure of not lower than 0.05 kg/cm$^2$ to produce a fibrous food product having desired good fibrous texture.

The ingredients can be mixed during continuous mixing and extrusion steps, or they can be separately mixed prior to subject them to an extrusion step. Likewise, the water content of the mixture can be adjusted by previously adding water to the mixture of the ingredients, or by adding water with an appropriate means such as a metering pump to the mixture during continuous mixing and extrusion steps. When the water content is less than 20 % by weight, only a non-fibrous membraneous product is obtained. On the other hand, when the water content is higher than 86 % by weight, a resulting product does not have shape retention.

Mixing can be carried out by using a conventional kneader, and any conventional extruder applicable for cooking under pressure can be used. When the extrusion temperature is lower than 60°C, it is difficult to obtain a fibrous product. On the other hand, even if the extrusion temperature is 100°C or higher, a fibrous product can be obtained. However, the fibrous texture is disordered because of boiling of water, while such disorder is preferred in case that a product having random orientation of fibers is desired. When the extrusion pressure is too low, it is also difficult to obtain a fibrous product. The upper limit of the extrusion temperature and pressure are not limited to specific degrees unless they have any adverse effect on the resulting product and are not practical. However, usually, extrusion is carried out at a temperature of 60 to 95°C and at a pressure of 0.05 to 10 kg/cm$^2$.

The fibrous food product obtained according to the process of the present invention can be consumed as food having new fibrous texture or as a raw material for producing other food.

The following reference examples, experiments and examples further illustrate the present invention in detail but are not to be construed to limit the scope thereof.

### Reference Example 1

5 kg of ι -Carrageenin was added to and dissolved in 350 liters of warm water to which was added 100 kg of casein. 72 liters of 1 N aqueous sodium hydroxide was added to the resulting mixture to dissolve the casein. The pH of the solution was 8.1. The solution was maintained at 80°C for 30 minutes, and then it was spray-dried to give 93 kg of the desired milk protein powder having acid- and base-resistance.

### Reference Example 2

1 g of Xanthan gum was dissolved in warm water (900 ml) to which was added 100 g of sodium caseinate and 2 g of of sodium tripolyphosphate to effect solution. The pH was 7.5. The resulting solution was heated to 75°C and maintained at this temperature for 5 minutes. Then, the solution was cooled to room temperature to obtain a solution of the desired milk protein having acid- and base-resistance.

### Reference Example 3

0.3 g of Xanthan gum and 1.7 g of κ -carrageenin was added to 370 ml of warm water and the resulting mixture was heated at 80°C to effect solution, after which 2.0 g of calcium chloride dihydrate was added and dissolved. 100 g of casein was dispersed in the solution and 30 ml of 10 % aqueous sodium hydroxide was added to dissolved casein. The pH of the solution was 7.6. The solution was heated at 80°c for 30 minutes. Then, the solution was cooled to room temperature to obtain a solution of the desired milk protein having acid- and base-resistance.

### Reference Example 4

To 900 ml of warm water was added 3 g of sodium alginate and 30 g of sodium caseinate to effect solution. 5 g of sodium tripolyphosphate was added to this solution and reacted by heating at 90°C for 5 minutes to obtain a solution of the desired milk protein having acid- and base-resistance. The pH thereof was 8.1.

### Experiment 1

Effect of the ratio of the amount of material to which fibrous texture is provided to that of the milk protein

100 kg of the milk protein powder obtained in Reference Example 1, lactalbumin in the amount shown in Table 1 and 4.5 kg of calcium chloride dihydrate were mixed in a V-shaped mixer. The mixture was fed to a twin-screw extruder (Clextral Cooker Extruder Type BC 45) at the rate of 40 kg/hour, while water was also fed at the rate of 60 liters/hour to adjust the water content to 60 % by weight. Kneading and extruding were performed under the following conditions.

Number of revolutions of screw: 200 r.p.m.

Outlet temperature: 90°C

Outlet pressure: 0.1 kg/cm$^2$

Kneading element: at 2 points

Die: 2 x 20 mm, 2 pieces

Texture of the extruded product was observed under a microscope and evaluated according to the following criteria:

A: The product was composed of fibers of less than several microns.

B: The product was composed of fibers of several microns to several ten microns.

C: The product was composed of fibers of less than 100 microns with a membraneous part.

D: The product was membraneous and no fiber was observed.

E: No fiber was observed and the product was a paste having no shape retention, or was fragile

It was considered that the product evaluated as A to C has good fibrous texture. The results are shown in Table 1.

Table 1

| Amount of lactalbumin (kg) | Texture |
|---|---|
| 5 | C |
| 10 | C |
| 20 | B |
| 50 | A |
| 100 | A |
| 200 | A |
| 300 | B |
| 400 | C |
| 450 | D |

500                                                    E

As is seen from Table 1, when the material to which fibrous texture is provided is used in an amount 5 to 400 parts by weight per 100 parts of the milk protein, the desired fibrous food product having good fibrous texture can be obtained.

Experiment 2

Effect of calcium ion content

According to the same procedure as in Experiment 1, texture of the product was evaluated except that 40 kg of lactalbumin powder was used and the amount of calcium chloride dihydrate was varied as shown in Table 2. The results are shown in Table 2.

Table 2

| Calcium chloride dihydrate (kg) | Amount of calcium ion (kg) | Texture |
|---|---|---|
| 0 | 0 | D |
| 0.3 | 0.0816 | D |
| 0.48 | 0.13 | C |
| 1 | 0.272 | B |
| 2 | 0.544 | A |
| 5 | 1.36 | A |
| 6.5 | 1.768 | B |
| 7.35 | 2 | C |
| 8 | 2.176 | D |

As is seen from Table 2, when calcium ion is present in an amount of 0.13 to 2 parts by weight per 100 parts by weight of the milk protein, the product having good fibrous texture can be obtained.

Experiment 3

Effect of water content

According to the same procedure as in Experiment 1, texture of the product was evaluated except that 40 kg of lactalbumin powder was used and the water content was varied as shown in Table 3. The results are shown in Table 3.

Table 3

| Water content (% by wt.) | Texture |
|---|---|
| 18 | D |
| 20 | C |
| 30 | B |
| 40 | A |
| 70 | A |
| 80 | B |
| 86 | C |
| 90 | E |

As is seen from Table 3, when the water content is 20 to 86 % by weight, the product having good fibrous texture can be obtained.

Experiment 4

Effect of extrusion temperature

According to the same procedure as in Experiment 3, texture of the product was evaluated except that water was fed to the extruder at a rate of 60 liters/hour and the outlet temperature of the extruder was varied as shown in Table 4.  The results are as shown in Table 4.

### Table 4

| Outlet temperature (°C) | Texture |
|---|---|
| 50 | E |
| 60 | C |
| 90 | A |
| 100 | A |
| 110 | A[*] |

*:  The orientation of fibers was disordered by boiling of water at the outlet.

As is seen from Table 4, when the outlet temperature is 60°C or higher, the product having good fibrous texture can be obtained.

### Experiment 5

Effect of pressure

According to the same procedure as in Experiment 3, texture of the product was evaluated except that water was fed to the extruder at a rate of 160 liters/hour (80 % by weight), the outlet temperature of the extruder was 90°C and the extrusion pressure was varied by using dies having various shapes.  The results are shown in Table 5.

### Table 5

| Shape of die | Extrusion pressure $(kg/cm^2)$ | Texture |
|---|---|---|
| Without die | 0.02 | E |
| 3x30 mm, 2 pieces | 0.05 | C |

| | | |
|---|---|---|
| 2x20 mm, 2 pieces | 0.1 | A |
| 5 mm φ 2 pieces | 0.21 | A |
| 3 mm φ 2 pieces | 0.52 | A |

As is seen from Table 5, when the extrusion pressure is at least 0.05 kg/cm$^2$, the product having good fibrous texture can be obtained.

### Experiment 6

Effect of kind of the materials to which fibrous texture is provided

A mixture of 100 kg of powder of the milk protein obtained in Reference Example 3, 60 kg of a material to which fibrous texture is provided and 4 kg of calcium chloride dihydrate was treated according to the same procedure as in Experiment 1 with adjusting the water content at the outlet of the extruder to 60 % by weight and texture of the product was evaluated. The results are shown in Table 6.

### Table 6

| Material | Texture |
|---|---|
| Glycerin | D |
| Glucose | C |
| Lactose | A |
| Corn starch | A |
| Butter* | A |
| Palm oil* | A |
| Lard* | A |

| | |
|---|---|
| Sodium glutamate | D |
| Egg white powder | A |
| Gluten | A |
| Soybean protein | A |
| Skimmed powdered milk | A |
| Fish meat paste (Surimi) | A |
| Chocolate | A |
| Cheese | A |

*: Upon cooling quickly at the outlet of the extruder, release of fats and oils could be prevented and, Upon cooling lower than the melting point of fats and oils, good fibrous texture was obtained.

As is seen from Table 6, fibrous texture can be provided to almost all food and raw materials thereof. However, it is difficult to provide fibrous texture to sugars and proteins which have low molecular weight.

Example 1

50 kg of the milk protein powder obtained in Reference Example 1, 75 kg of fish surimi and 2 kg of calcium chloride dihydrate were treated in a silent cutter to obtain 127 kg of paste. 100 kg of this paste was fed to a twin-screw extruder (Clextral Cooker Extruder Type BC 45) at a rate of 40 kg/hour, while water was also fed to the extruder at a rate of 20 liters/hour. Kneading and extrusion were carried out under the following conditions.

Number of revolutions: 200 r.p.m. (rotating in the same direction)

Outlet temperature:  90°C

Die:  2 x 20 mm, 2 pieces

Kneading disk:  at 2 points

Heating zone:  2

As the result, 130 kg of a white surimi mixture in the shape of a cord having water content of 65 % by weight was obtained.  When the cord was stretched radially, it was torn lengthwise and fibers were clearly observed by the ked eye.  According to observation under a microscope, it was composed of fibers of less than 5 microns.  Upon eating this white cord, it had "Kamaboko"-like taste and meat-like texture.

Example 2

A mixture of 100 kg of powder of the milk protein obtained in Reference Example 3, 40 kg of bitter chocolate, 20 kg of cocoa powder, 100 kg of powdered sugar and 2 kg of calcium chloride dihydrate was fed to an extruder at the rate of 40 kg/hour together with water at 20 liters/hour under the same operation conditions as in Example 1 to obtain 350 kg of a fibrous chocolate product having the water content of 30 % by weight.  When the chocolate was torn by the hand, it was torn along fibers.  This chocolate product was readily molten in the mouth and there was no feeling of scraps.

Example 3

A mixture of 50 kg of powder of the milk protein obtained in Reference Example 4, 180 kg of lactalbumin powder and 0.1 kg of calcium chloride dihydrate was fed to an extruder at the rate of 30 kg/hour together with water at 50 liters/hour under the same operation conditions as in Example 1 except that the outlet pressure was 0.2 kg/cm$^2$ and the outlet temperature was 98°C. 360 kg of cream-colored cords having about 2 cm width were obtained. Upon eating the product, it showed chicken meat-like texture. According to the observation under a microscope, there were some membraneous parts, but more than 80 % of the product was composed of fibers of several microns.

Example 4

A mixture of 50 kg of powder of the milk protein obtained in Reference Example 2 and 2 kg of calcium chloride dihydrate was fed to an extruder at the rate of 40 kg/hour under the following conditions together with water at the rate of 20 liters/hour and molten butter at the rate of 40 kg/hour.

Kneading disk: at 2 points

Number of revolutions of screw: 200 r.p.m.

Outlet temperature: 65°C

Outlet pressure: 0.2 kg/cm$^2$

Die: 2 x 20 mm, 2 pieces

The extruded product was cooled to 25°C or lower by blowing cold air at the outlet of the extruder to obtain 110 kg of a fibrous food product containing butter. When the product was torn by the hand, fibers were appeared. By observation under a microscope, it was composed of fibers of several microns.

### Example 5

A mixture of 100 kg of the milk protein powder obtained in Reference Example 1, 50 kg of lactose and 3 kg of calcium chloride dihydrate was fed to an extruder at a rate of 40 kg/hour under the following operation conditions together with water at a rate of 40 kg/hour.

Kneading disk:  at 2 parts

Number of revolutions of screw:  150 r.p.m.

Outlet temperature:  100°C

Outlet pressure:  0.1 kg/cm$^2$

Die:  2 x 20 mm, 2 pieces

According to this procedure, 280 kg of a bundle of white fibers was obtained. When this product was torn by the hand, fibers were observed. By observation under a microscope, the product was composed of fibers of less than 1 micron. This product can be used as a filler of various food.

CLAIMS:

1.  A process for producing a fibrous food product which comprises

adjusting the water content of a mixture of raw materials to 20 to 86 % by weight, if necessary, with mixing, said mixture comprising

(a) 100 parts by weight as dry solids of milk protein having acid- and base-resistance which is obtained by subjecting an aqueous solution or dispersion containing casein and 0.5 to 30 parts by weight of an acidic polysaccharide per 100 parts by weight of casein to a heat treatment at pH 7.3 to 10.5 and at a temperature of 70°C or higher for 3 minutes or more;

(b) 5 to 400 parts by weight of a material to which fibrous texture is  to be provided, said material being chosen from fats and oils, carbohydrates having a molecular weight of less than 180, proteins, peptides, food or raw materials thereof which contain any of these ingredients thereof, and mixtures thereof; and

(c) 0.13 to 2.0 parts by weight of calcium ion, 0.065 to 1.0 part by weight of magnesium ion, or a mixture of calcium ion and magnesium ion corresponding to 0.13 to 2.0 parts by weight as calcium ion, and

extruding the mixture from an extruder at a temperature of not lower than 60°C and at a pressure of not lower than 0.05 $kg/cm^2$.

2.  A process according to claim 1, wherein the extrusion is carried out at a temperature of 60 to 95°C and at a pressure of 0.05 to 10 kg/cm$^2$.

3.  A process according to claim 1 or claim 2, wherein the acidic polysaccharide is

alginic acid, sodium alginate, alginic acid propylene glycol, carrageenin, furcellaran, gum karaya, gum ghatti, gum tragacanth, xanthan gum, methyl cellulose, carboxy methyl cellulose  or low-methoxyl pectin.

4.  A process according to any one of claims 1 to 3, wherein the fat or oil to which fibrous texture is to be provided is selected from butter, butter oil, palm oil, coconut oil, linseed oil, rapeseed oil, soybean oil, sunflower oil, sesame oil, cacao butter, peanut oil, cottonseed oil, olive oil, lard, tallow, fish oil, and their hardened, fractionated and transesterified products.

5.  A process according to any one of claims 1 to 3, wherein the carbohydrate having a molecular weight of less than 180 to which fibrous texture is to be provided is selected from glucose, fructose, sucrose, maltose, lactose, starch, starch hydrolysate, glucomannan, guar gum, locust bean gum, tamarind gum, carrageenin, xanthan gum, low-methoxyl pectin, high-methoxyl pectin, alginic acid, and sodium alginate.

6.  A process according to any one of claims 1 to 3, wherein the protein or peptide to which fibrous texture is to be provided is selected from casein, gelatin, soybean protein, gluten, ovalbumin, whey protein, serum protein, and decomposition products thereof.

7. A process according to any one of claims 1 to 6, wherein the food or raw material to which fibrous texture is to be provided is selected from the meat of fish, cattle and poultry, skim milk, whole milk, soy meal, wheat flour, cocoa powder, corn grits, condensed milk, cheese, chocolate, fish surimi, cattle meat paste and poultry meat paste.

8. The use of a milk protein having acid- and base-resistance in imparting a fibrous quality to a non-fibrous foodstuff or ingredient thereof or in increasing the fibrous texture of such foodstuff or ingredient.

9. A process for producing a fibrous food product which comprises adjusting the water content of a mixture of milk protein having acid- and base-resistance, a material to which fibrous texture is to be provided and a source of calcium ion or megnesium ion to 20 to 86% by weight, and then extruding the mixture from an extruder at a temperature of not lower than 60°C and at a pressure of not lower than 0.05 kg/cm².